# EUROPÄISCHE PATENTSCHRIFT

(11) **EP 2 841 823 B1**
(45) Veröffentlichungstag und Bekanntmachung des Hinweises auf die Patenterteilung: **08.06.2016**
(21) Anmeldenummer: 12795402.2
(22) Anmeldetag: 27.11.2012
(51) Int. Cl.: F16J 15/12

(54) **TRÄGERRAHMENDICHTUNG MIT VERRINGERTEM PLATZBEDARF**
SUPPORT FRAME SEAL WITH REDUCED SPACE REQUIREMENTS
JOINT À CADRE SUPPORT À ENCOMBREMENT RÉDUIT

(30) Priorität: 23.04.2012 DE 102012206626
(43) Veröffentlichungstag der Anmeldung: 04.03.2015
(73) Patentinhaber: Federal-Mogul Sealing Systems Gmbh, 57562 Herdorf (DE)
(72) Erfinder: SALAMEH, Ralf, 75053 Gondelsheim (DE)
(74) Vertreter: Becker Kurig Straus
(86) Internationale Anmeldenummer: PCT/EP2012/073694
(87) Internationale Veröffentlichungsnummer: WO 2013/159838

(56) Entgegenhaltungen:
- WO-A1-01/44699
- WO-A1-95/23934

## Beschreibung

Die vorliegende Erfindung betrifft Trägerrahmendichtungen, wie sie für Gehäuseteile mit Dichtflächen wie Deckel oder Hauben verwendet werden, die an anderen Maschinenteilen befestigt werden.

Die vorliegende Erfindung bezieht sich vorzugsweise auf den Einsatz bei Trägerrahmendichtungen. Die vorliegende Erfindung betrifft dabei insbesondere eine Bauform, bei der ein Dichtprofil aus Elastomer stumpf an der Stirnseite eines Trägerrahmens anvulkanisiert ist. Diese Ausführungsform hat den Vorteil, dass man einen Trägerrahmen wie einen Aluminiumträgerrahmen einmal als Trägerrahmen für das Dichtprofil benutzt und dieser auch andererseits als Wegbegrenzer bzw. Verpressungsbegrenzer für die Elastomerdichtung dient und zusätzlich die Verschraubungskräfte aufnimmt. Der Trägerrahmen wirkt hier als Verpressungsbegrenzer, so dass die Dichtung im Kraftnebenschluss liegt. Idealerweise hat der Flansch, auf dem die Dichtung montiert werden soll, eine ausreichende Breite, d.h. es ist genug Raum sowohl für das Dichtprofil als auch ausreichend Auflagefläche für den Trägerrahmen vorhanden. Die Trägerrahmen für solche Dichtungen werden fast ausschließlich durch Stanzen hergestellt, da dies die kostengünstigste Möglichkeit der Herstellung ist.

Aufgrund stetig steigender Anforderungen an Bauraumreduzierung, Gewichtsreduzierung, etc. wurden die Flanschflächen für die Dichtungen stetig bis an die Grenzen der Herstellungsmasse von Trägerrahmendichtungen reduziert. Inzwischen sind an bestimmten Stellen oder auch bei gesamten Bauteilen die Grenzen erreicht, sodass eine sinnvolle Herstellung und auch Funktion der Dichtungen in Frage zu stellen ist.

Kritische Stellen einer Trägerrahmendichtung in Bezug auf die Flanschbreiten sind im Allgemeinen die Bereiche um Verschraubungen herum. Der Grund hierfür liegt darin, dass abgesehen von der Öffnung im Trägerrahmen, durch den die Schraube geführt wird, der Trägerrahmen innen und außen an der Verschraubungsöffnung vorbeigeführt werden muss, damit sich wiederum eine geschlossene Bohrung ergibt. Bekannte Sonderlösungen werden im Stand der Technik angegeben.

Oftmals ist von diesen kritischen Stellen nicht der ganze Trägerrahmen betroffen, sondern evtl. existiert nur eine Verschraubungsöffnung, bei der dieses Problem auftritt. Es können aber auch der komplette Trägerrahmen und somit alle Verschraubungspunkte betroffen sein.

Der Stand der Technik (Standardlösung) und auch die einfachste Umsetzung dieser Bereiche in eine Dichtungslösung sind gegeben, wenn die Flanschfläche beider Bauteile in allen Bereichen genügend Breite und Überdeckung zur Verfügung stellt. In diesen Fällen ist es nicht notwendig, an die Herstellbarkeitslimits der Trägerrahmen zu gehen und die Umfahrungen im Bereich der Verschraubungsöffnungen besitzen nach außen wie auch innen eine ausreichende Trägerrahmenbreite. Idealerweise bietet die Flanschfläche auch genügend Platz, damit zwei Dichtlippen um den Verschraubungsbereich herumgeführt werden können, die dann innerhalb aller Toleranzlagen sicher auf den beiden Flanschseiten aufliegen, wobei die Dichtlippen mit beiden Flanschen in sicherem Kontakt stehen.

Für eine Umfahrung im Bereich der Schraubdurchgänge, aber auch für andere schmale Bereiche liegt die minimale Stegbreite, die sich sinnvoll durch Stanzen herstellen lässt, etwa bei einem Verhältnis von 2 zu 1. Das bedeutet, dass ein Steg mindestens doppelt so breit ausgeführt werden muss, wie die Dicke des Bleches, in den der Steg gestanzt wird. Ist das Trägerblech beispielsweise 1 ,5mm dick, muss der Steg ca. 3mm breit sein, damit er noch gut im Stanzwerkzeug geklemmt und ausgestanzt werden kann, ohne dass größere Verformungen des Stegs auftreten. Bei vielen Teilen wird diese Grenze inzwischen unterschritten und die im Folgenden beschriebenen Nachteile in Kauf genommen.

Eine weitere Reduzierung der Umfahrungsbreite wäre notwendig, um überhaupt eine Lösung für diese Problemstellen zur Verfügung zu haben. Eine schmalere Umfahrung der Schraubenöffnung am Trägerrahmen kann nur unter das sinnvolle Maß reduziert werden, wenn andere Nachteile in Kauf genommen werden. Wird die Breite des Stegs bis hin zu einem quadratischer Querschnitt (z.B. Trägerblechdicke 1,5mm und Stegbreite 1,5mm) verringert, wird der Steg beim Stanzen deformiert, und es bilden sich durch das Stanzen bedingte Einzüge und der Steg kann sich auch verdrehen. Das Ergebnis aus der Stanzung ist in dem Bereich dann nicht mehr eindeutig geometrisch vorhersagbar. Abgesehen von der Verformung wird durch diese dünnen Stege auch die Steifigkeit des Trägerrahmens stark beeinträchtigt, was zu gravierenden Nachteilen beim Anspritzen der Elastomerdichtung führen kann, da der Spritzdruck bei der Fertigung den Steg verbiegen kann. Setzt man Stifte im Werkzeug an den Bohrungen zur Begrenzung der Verformung des Rahmens ein, können diese verklemmen und bei der Entnahme aus der Form wieder um die dünnen Stege verbiegen.

Ein weiterer gravierender Nachteil von sehr schmalen Stegen besteht in den Stanzeinzügen. Ein Stanzeinzug ist eine Verformung der Blechkante an einer Stanzlinie. Stanzeinzüge verhindern, dass der Trägerrahmen im Spritzwerkzeug optimal geklemmt werden kann, wodurch sich Überspritzungen von Elastomermaterial auf den Trägerrahmen, und in die Schraubenlöcher ergeben können, was nicht akzeptabel ist.

Ohne eine sichere Trennung der Elastomerbereiche und der Metallbereiche ist eine kostengünstige Fertigung, aufgrund von notwendigen Nacharbeiten nicht sinnvoll umsetzbar.

Ein weiteres Problem besteht darin, dass durch die unzureichende Abprägung das Elastomermaterial in die Bohrung laufen kann, die dann aufwändig von Hand wieder gesäubert werden muss.

Herkömmliche Trägerrahmendichtungen sind beispielsweise aus der WO 01/44699-A1 DE 42 13 653 C2 und der US 5,536,023 bekannt.

Bisher bestehen keine Möglichkeiten, kleinere Flanschbreiten mit einer Umfahrung des Trägerrahmens darzustellen. Es besteht bisher nur die Möglichkeit, das Design der Bauteile, die den Dichtflansch bilden, zu verändern, um die Flanschbreite zu erhöhen, dass die bekannte Bauform einer Trägerrahmendichtung eingesetzt werden kann.

Es ist also wünschenswert, Möglichkeit zur Verfügung zu stellen, bei der die Flanschbreiten reduziert werden können, d.h. also speziell die Breite der Trägerrahmendichtung im Bereich einer Umfahrung auf der Elastomerseite verringert werden kann, ohne dass die oben beschriebenen Nachteile auftreten.

Es besteht eine allgemeine Designvorgabe, Material bei der Herstellung einzusparen. Weiterhin besteht ein Bedarf, die Dichteigenschaften einer Trägerrahmendichtung zu verbessern. Schließlich besteht ebenfalls ein Bedarf, den Platzbedarf für Trägerrahmendichtungen zu verringern. Diese Forderung ergibt sich auch aus der Vorgabe, die abzudichtenden Bauteile möglichst leicht zu gestalten.

Gemäß einem ersten Aspekt der vorliegenden Erfindung wird eine Trägerrahmendichtung mit verringertem Platzbedarf bereitgestellt. Die Trägerrahmendichtung umfasst einen Trägerrahmen und ein Dichtprofil aus einem Elastomermaterial, das stumpf an einer Stirnseite eines Trägerrahmens anvulkanisiert ist. Der Trägerrahmen weist weiter Aussparungen für Befestigungselemente auf. An mindestens einer Aussparung ist der Trägerrahmen an der Seite, an dem das Dichtprofil anvulkanisiert ist unterbrochen, und verläuft nur auf der dem Dichtprofil gegenüberliegenden Seite der mindestens einen Ausnehmung. Weiterhin ist der Trägerrahmen an der mindestens einen Aussparung mit einem Ring bzw. mit einem Ringelement versehen.

Der Ring bzw. das Ringelement ist dazu bestimmt um ein Befestigungselement zu umgeben, das durch die Ausnehmung verlaufen soll. Der Ring bzw. das Ringelement liegt dabei in der Ebene des Trägerrahmens.

In dieser Ausführungsform ist das Durchgangsloch für Befestigungsschrauben durch den Trägerrahmen zur Seite der Elastomerdichtung hin offen. Das Durchgangsloch für Befestigungsschrauben in dem Trägerrahmen wurde in dieser Ausführungsform zu einer halboffenen Ausnehmung erweitert. Die offene Seite der Ausnehmung in dem Trägerrahmen wird dabei durch den Ring bzw. das Ringelement geschlossen.

Das anvulkanisierte Elastomer schließt dabei eventuelle Übergänge zwischen Ring bzw. dem Ringelement und dem Dichtprofil.

Bei dieser Ausführungsfonn wird auf eine vollständige Umfahrung der Verschraubungsöffnung durch den Trägerrahmen selbst auf der Seite verzichtet, an der das Dichtprofil angeordnet ist. Die fehlende Umfahrung wird dabei durch den Ring bzw. das Ringelement bereitgestellt. Durch diese Form kann ausreichend stabile Umfahrung des Verschraubungsbereiches bei gleichzeitig verringertem Platzbedarf erreicht werden. Gleichzeitig können die gravierenden Nachteile in der Fertigung wie den vorstehend beschriebenen Stanzeinzug und die Verformung der dünnen Umfahrungsbereiche vermieden werden.

In einer zusätzlichen beispielhaften Ausführungsform weist der Ring eine Wanddicke auf, die kleiner ist als eine Breite eines Steges, der in den Trägerrahmen gestanzt werden kann, ohne dass sich das Material des Trägerrahmens verzieht, Einzüge entstehen oder der verbleibende Steg sich beim Ausstanzen verdrehen kann. Der Ring muss nicht durch ausstanzen hergestellt sein, und kann daher einen Querschnitt aufweisen, die mit stanzen nicht zu erreichen ist. Die Wandstärke des Rings in Radialrichtung kann kleiner sein wie die Dicke des Rings in Axialrichtung. Die Wandstärke des Rings in Radialrichtung kann weniger als halb so klein sein wie die Dicke des Rings in Axialrichtung.

In einer anderen zusätzlichen Ausführungsform der Trägerrahmendichtung weist ein Material aus dem Ring gefertigt ist eine höhere Festigkeit auf, als ein Material aus dem der Trägerrahmen gefertigt ist. Damit kann auch erreicht werden, dass sich der Ring im Betrieb nicht verbiegt. Es kann ebenfalls verhindert werden, dass der Ring beim Anspritzen/Vulkanisieren des Dichtprofils der Ring verbogen oder zerstört wird. Ein Ring aus festem Material gestattet es ebenfalls beim Anspritzen/Vulkanisieren des Dichtprofils sicherzustellen, dass kein Elastomermaterial in den Ring bzw. in eine Schraubendurchführung bzw. die Ausnehmung läuft.

In einer beispielhaften Ausführungsform wird mindestens eine weitere der Aussparungen von dem Dichtprofil umfahren, wobei das Dichtprofil im Bereich mindestens einer Umfahrung in der Breite verringert ist. Diese Ausführungsform betrifft eine Dichtung mit einer offenen oder mit einem Ring versehen Ausnehmung die von einem Dichtprofil umfahren wird, das in seiner Breite verringert ist. Durch diese Konstruktion kann die Breite der Trägerrahmendichtung an einer Umfahrung einer Befestigungsöffnung weiter stark verringert werden, bzw. der Platzbedarf der Trägerrahmendichtung wird im Bereich einer Verschraubung bzw. einer Befestigungsöffnung maximal verringert.

In einer weiteren zusätzlichen Ausführungsform der Trägerrahmendichtung weist das Dichtprofil in dem Bereich der mindestens einen Umfahrung bzw. der einseitig offenen Ausnehmung bzw. des Rings eine Dichtlippe auf, während das Dichtprofil in Bereichen außerhalb der mindestens einen Umfahrung der einseitig offenen Ausnehmung bzw. des Rings zwei Dichtlippen aufweist, die nebeneinander verlaufen.

In einer weiteren Ausführungsform der Trägerrahmendichtung weist das Dichtprofil in dem Bereich der mindestens einen Umfahrung eine Dichtlippe auf, während das Dichtprofil in Bereichen außerhalb der mindestens einen Umfahrung zwei Dichtlippen aufweist, die nebeneinander verlaufen.

Dies lässt sich auch auf Dichtprofile mit mehr als zwei, d.h. drei oder mehreren Dichtlippen in Bereichen außerhalb der mindestens einen Umfahrung umsetzen. Damit sind auch wenn im restlichen Flanschbereich zwei oder mehrere Dichtlippen vorhanden sind, im Bereich der Schraubenaugen die Anzahl der Dichtlippen auf eine verringert. Dabei können zwei oder mehrere Dichtlippen im Bereich eine Umfahrung zu einer einzigen Dichtlippe zusammengeführt werden, die nach der Umfahrung wieder in zwei Dichtlippen auseinanderläuft. Das Zusammenführen der Dichtlippen zu einer einzigen im Bereich der Verschraubung erscheit aus technisch vertretbar, da an dieser Stelle minimale Toleranzen bei optimaler Verpressungskraft vorliegen.

In einer weiteren beispielhaften Ausführungsform der Trägerrahmendichtung ist die eine Dichtlippe breiter ausgeführt als jede der beiden nebeneinander verlaufenden zwei oder mehreren Dichtlippen.

Es ist ebenfalls vorgesehen die einzelne Dichtlippe höher auszuführen als jede der beiden nebeneinander verlaufenden zwei oder mehreren Dichtlippen. Dabei kann einer höhere Verpressung der einzelnen Dichtlippe und eine höhere Dichtwirkung im Bereich der Verschraubung der Bauteile erreicht werden.

Es ist vorgesehen, dass der mindestens eine Ring außen nicht rund ist. Eine an der Außenseite eckige oder ovale Form des Rings kann dazu beitragen den Ring besser in der Trägerlage zu fixieren. Ein an der Außenseite ein- oder zweiseitig abgeflachter bzw. ovaler Ring kann zudem den auf ihn ausgeübten Druck durch die Verschraubung oder beim Aufbringen der Elastomers besser aufnehmen bzw. übertragen.

Es ist ebenfalls vorgesehen einen nicht geschlossenen Ring zu verwenden. der Ring muss auf der Seite, die dem Dichtprofil gegenüber liegt nicht geschossen sein, da die Verschraubungskräfte bereits durch den dort angeordneten Trägerrahmen aufgenommen werden können. Bei einer geeigneten Verbindung zwischen Trägerrahmen und Ring bzw. Ringelement kann ebenfalls kein Elastomer durch den nicht-geschlossenen Bereich des Rings eintreten, das dieser Bereich durch den Trägerrahmen abgedeckt ist. Diese Ausführung gestattet den Einsatz von gewickelten Ringelementen, was deren Herstellungskosten für die Ringelemente drastisch senkt.

Gemäß einem weiteren Aspekt der der vorliegenden Erfindung wird eine Trägerrahmendichtung mit verringertem Platzbedarf bereitgestellt. Die Trägerrahmendichtung umfasst einen Trägerrahmen und ein Dichtprofil aus einem Elastomermaterial, das stumpf an eine Stirnseite eines Trägerrahmens anvulkanisiert ist. Der Trägerrahmen ist weiter mit Aussparungen für Befestigungselemente versehen, die dem Dichtprofil umfahren werden. Die Breite des Dichtprofils ist dabei im Bereich mindestens einer Umfahrung im Vergleich zu einer Breite des Dichtprofils in einem Bereich ohne Ausnehmung verringert.

Die Ausnehmung können beispielsweise als Durchgangslöcher für Befestigungsschrauben ausgeführt werden.

Es wird auf vollständige Umfahrung der Verschraubungsöffnung verzichtet, wobei das Dichtprofil nicht mit seiner vollständigen Breite die Verschraubungsöffnung umfährt. Dies bringt Nachteile bei der Abdichtung mit sich wobei durch eine geeignete Wahl der Form des Dichtprofils eine ausreichende stabile Umfahrung des Verschraubungsbereiches erreicht werden kann einen hinreichenden Platzvorteil bietet.

Dies lässt sich wie vorstehend beschrieben auch auf Dichtprofile mit mehr als zwei, d.h. drei oder mehreren Dichtlippen in Bereichen außerhalb der mindestens einen Umfahrung anwenden.

In einer weiteren beispielhaften Ausführungsform der Trägerrahmendichtung ist die eine Dichtlippe breiter ausgeführt als jede der beiden nebeneinander verlaufenden zwei oder mehreren Dichtlippen. Es ist ebenfalls vorgesehen die einzelne Dichtlippe höher auszuführen als jede der beiden nebeneinander verlaufenden zwei oder mehreren Dichtlippen. Dabei kann einer höhere Verpressung der einzelnen Dichtlippe und eine höhere Dichtwirkung im Bereich der Verschraubung der Bauteile erreicht werden.

In einer weiteren beispielhaften Ausführungsform übersteigt eine Dicke des Elastomers mit dem der unterbrochene Bereich des Trägerrahmens an der mindestens einen Aussparung mit Elastomer gefüllt ist, die eine Dicke des Trägerrahmens in diesem Bereich. Damit wird in dem Bereich in dem das Elastomer das Material des Trägerrahmens ersetzt eine höhere Verpressung des Elastomers erreicht, sodass verhindert werden kann, dass sich der Dichtbereich zu leicht in Richtung des Befestigungselements bewegen kann, und so eventuell beschädigt werden kann. Damit wird das Elastomer, das das Material des Trägerrahmens ersetzt, vorgespannt, um höheren Belastungen zu widerstehen.

In einer weiteren beispielhaften Ausführungsform der Trägerrahmendichtung ist die eine Dichtlippe breiter ausgeführt als jede der beiden nebeneinander verlaufenden zwei oder mehreren Dichtlippen.

Es ist ebenfalls vorgesehen die einzelne Dichtlippe höher auszuführen als jede der beiden nebeneinander verlaufenden zwei oder mehreren Dichtlippen. Dabei kann einer höhere Verpressung der einzelnen Dichtlippe und eine höhere Dichtwirkung im Bereich der Verschraubung der Bauteile erreicht werden.

In einer weiteren beispielhaften Ausführungsform ist der Trägerrahmen der Trägerrahmendichtung durch Ausstanzen aus einem Blech hergestellt.

Es ist bevorzugt, dass der Ring (die Ringe) eine andere Höhe hat (haben) als der Trägerrahmen bzw der Ring (die Ringe) mit dem Trägerrahmen im Spritzwerkzeug verbunden werden kann (können), zB mit Elastomer. Alternativ kann der Ring (die Ringe) mit dem Trägerrahmen schon vor dem Spritzprozess verbunden werden, zB durch Einclipsen, Einpressen, Einkleben und ist somit mit dem Trägerrahmen verbunden, wobei der Rahmen "einstückig" ins Spritzwerkzeug eingelegt werden kann.

In den Figuren sind bevorzugte Ausführungsformen der vorliegenden Erfindung dargestellt.
Figur 1 und 1A zeigten verschiedene Ansichten einer herkömmlichen Trägerrahmendichtung.
Figuren 2A bis 2D stellen Ansichten stellt einer erfindungsgemäßen Trägerahmendichtung dar.
Figuren 3A bis 3D stellen jeweils Detailansichten einer anderen erfindungsgemäßen Trägerrahmendichtung dar.

Sowohl in den Figuren als auch in den Zeichnungen werden gleiche Bezugszeichen verwendet, um gleiche oder ähnliche Elemente und Baugruppen darzustellen. Die Darstellungen können teilweise schematisch oder nicht maßstabsgerecht ausgeführt sein.

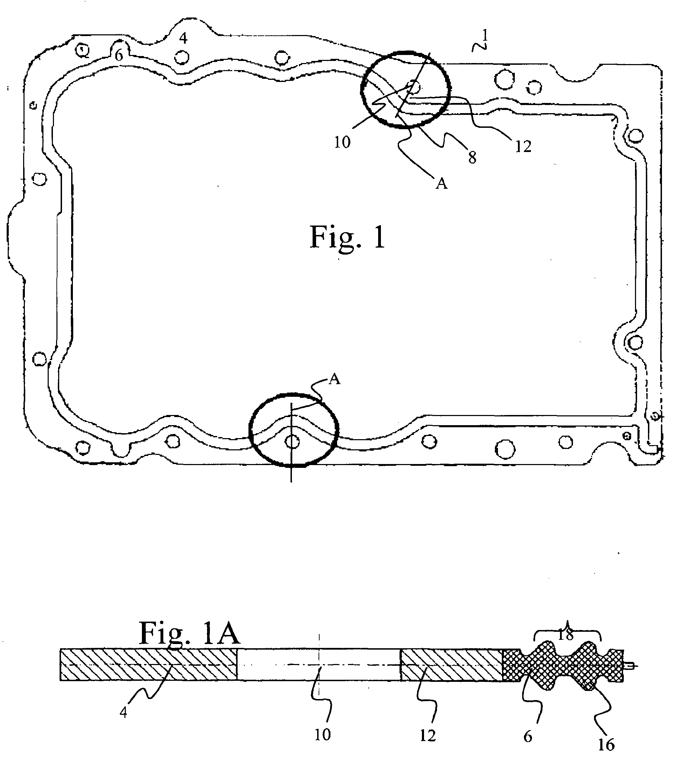

Figur 1 zeigt eine Aufsicht auf eine herkömmliche Trägerrahmendichtung 1 mit einem Trägerrahmen 4 und einem Dichtprofil 6. Der Trägerrahmen 4 der Trägerrahmendichtung 2 ist weiterhin mit Ausnehmungen 10 bzw. Durchgangslöchern versehen, durch die Schrauben zur Verbindung von zwei abzudichtenden Bauelementen führen können. In der Figur ist ein Bereich 8 einer Umfahrung der Ausnehmung 10 mit einem Kreis hervorgehoben. In dem Kreis ist eine Linie A gezeigt, die die Schnittlinie dargestellt entlang der die Trägerrahmendichtung 1 zur Darstellung in der Figur 1A geschnitten ist.

Figur 1A zeigt die Schnittansicht entlang der Linie A von Figur 1. Die Trägerrahmendichtung ist im Bereich einer Ausnehmung 10 geschnitten. Der Trägerrahmen umfährt die Ausnehmung 10 auf deren beiden Seiten, außen mit dem Anschnitt 4 und innen mit der Umfahrung 12. An der Innenseite des Trägerrahmens ist ein Dichtprofil 6 anvulkanisiert bzw. angespritzt ist. Das Dichtprofil umfasst einen Dichtbereich 18 mit zwei parallel verlaufenden Dichtlippen 16.

Es sollte klar sein, dass es nicht möglich ist, die Breite der Umfahrung 12 bei gegebener Dicke beliebig zu verkleinern, sofern der Trägerrahmen durch Stanzen aus einem Blech hergestellt werden soll.

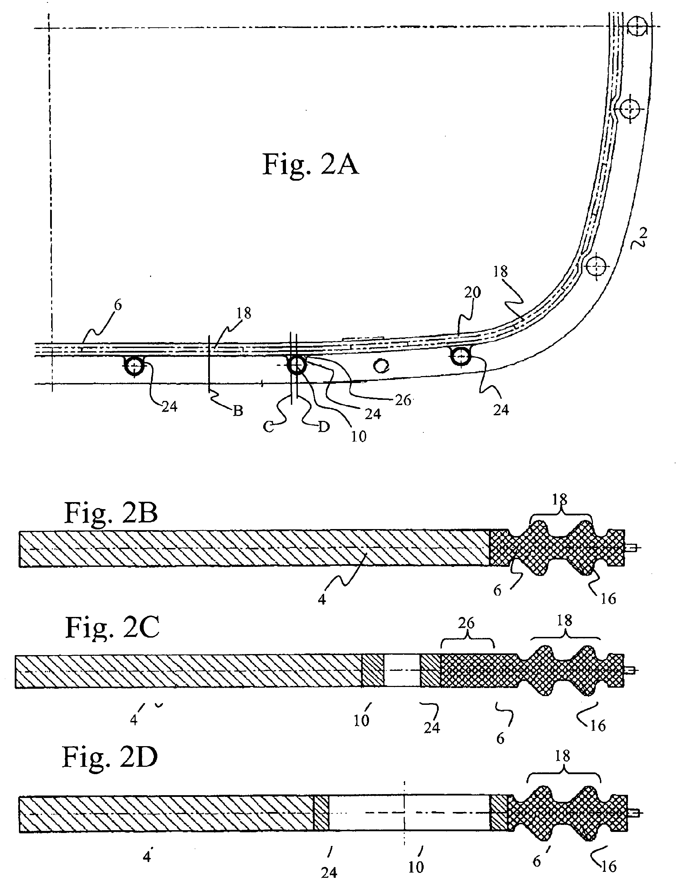

Figur 2A stellt eine Aufsicht auf eine erfindungsgemäße Trägerrahmendichtung 2 dar, bei der die Ausnehmungen 10 für die Befestigungselemente zur der Seite des Dichtprofil 6 hin offen sind, wobei in die Ausnehmungen Ringe bzw. Ringelemente 24 eingesetzt sind.

In Figur 2B ist der Schnitt von Figur 2A englang der Linie B dargestellt, mit dem Trägerrahmen 4 und dem Dichtprofil 6 mit dem, zwei Dichtlippen 16 umfassenden Dichtbereich 18. Die Figur 2B entspricht dabei der Figur 1A. ohne die Durchgangsöffnung.

In Figur 2A ist weiterhin ein Schnittlinie C dargestellt, welche die die Ausnehmung 10 lediglich anschneidet.

Die Figur 2C bzw. der Schnitt C zeigt einen flachen Anschnitt durch die mit einem Ring 24 versehenen Ausnehmung 10. Durch den flachen Schnitt 5 erscheint der Ring breiter und der freie Innenraum des Rings erscheint kleiner. Das Dichtprofil 6 umfasst dort den gleichen 18 mit den gleichen zwei nebeneinander verlaufenden Dichtlippen 16, die im gleichen Abstand voneinander verlaufen.

In Figur 2C ist dargestellt, dass ein Bereich 26, in dem der Trägerrahmen 4 nicht gleichmäßig in den Ring 24 übergeht, mit Elastomermaterial 26 aufgefüllt ist. Das Elastomermaterial 26 verhindert, dass das Dichtprofil 6 in Richtung der Ausnehmung verschoben werden kann.

Figur 2D stellt deutlich dar, wie schmal der Steg mit Hilfe des Ringelements ausgeführt werden kann. Ein herkömmlicher ausgestanzter Steg, der den gleichen Raumgewinn auf der Seite des Dichtprofils 6 erreichen müsste, könnte nicht hergestellt werden. Ein derartiger Steg kann jedoch nicht mit herkömmlichen und kostengünstigen Stanzverfahren hergestellt werden, da seine Höhe in Stanzrichtung größer bzw. doppelt so groß ist wie seine Breite. Ein derartiger dünner Steg aus dem Material des Trägerrahmens lässt sich nur mit anderen teueren Herstellungsverfahren wie beispielsweise Laserschneiden, Fotoätzen oder Funkenerosion erreichen. Es ist ebenfalls zu erkennen, dass ein so dünner Steg aus dem Material des Trägerrahmens 4 nicht den Drücken in einer Spritzgussmaschine widerstehen kann, weshalb zu befürchten ist, dass dieser beim Anformen des Dichtprofils der Steg beschädigt wird.

Der Ring in Figur 2C kann aus einem festeren Material als dem Material des Trägerrahmens hergestellt werden, weshalb der Ring den Kräften, die beim Anspritzen des Dichtprofils wirken, widerstehen kann, ohne sich zu verformen. Ein Ring aus festerem Material kann auch in einem Bereich mit weniger Breite die Verschraubungskräfte, die auf die eingebaute Dichtung wirken, aufnehmen.

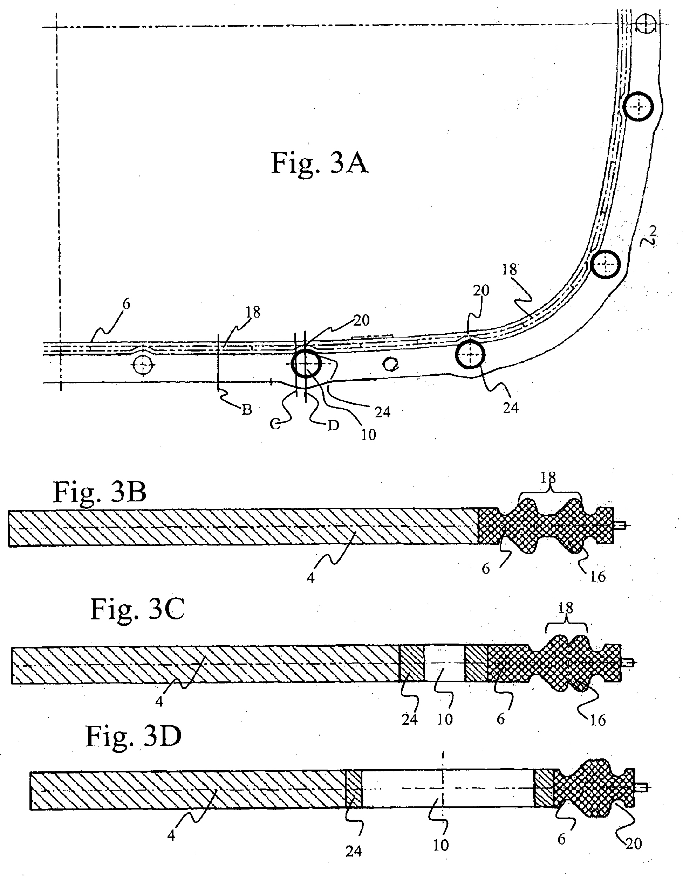

Figur 3A stellt eine Aufsicht auf eine andere erfindungsgemäße Ausführungsform einer Trägerrahmendichtung 2 dar. In Figur 3A verlaufen die Ausnehmungen 10 ebenfalls bis zum Rand. In die Ausnehmungen sind zusätzlich Ringe bzw. Ringelemente 24 eingelegt, die nicht durch ausstanzen hergestellt werden müssen. Die Figuren 3B bis 3D stellen jeweils Schnittansichten entlang der Linien B, C und D von Figur 3A dar. In Figur 3A ist zu erkennen, dass das Dichtprofil 6 in den Bereichen, die von den Ausnehmungen entfernt sind breiter ausgeführt ist, als direkt an den Ausnehmungen 10. Das Dichtprofil ist im Bereich der Ausnehmungen ist schmaler ausgeführt und wird von zwei Dichtlippen 16 zu einer Dichtlippe 20 zusammengeführt.

Der Schnitt B bzw. die Figur 3B entspricht den Figuren 2A und 1A. Das Dichtprofil 6 umfasst einen Dichtbereich 18 mit zwei nebeneinander verlaufenden Dichtlippen 16.

Der Schnitt C bzw. die Figur 3C zeigt einen flachen Anschnitt durch die mit einem Ring 24 versehenen Ausnehmung 10. Durch den flachen Schnitt 5 erscheint der Ring breiter und die Ausnehmung 10 erscheint kleiner. Das Dichtprofil 6 umfasst dort ebenfalls einen Dichtbereich 18 mit zwei nebeneinander verlaufenden Dichtlippen 16, die jedoch enger zusammengeführt sind.

Der Schnitt D bzw. die Figur 3D zeigt einen Schnitt gerade durch den Mittelpunkt der Ausnehmung 10 und durch den Ring 24. Durch den geraden schnitt ist die geringe radiale Dicke des Rings 24 zu erkennen, die kleiner ist als die axiale Ausdehnung des Rings 24. Das Dichtprofil 6 umfasst dort ebenfalls einen Dichtbereich mit nur noch einer einzelnen breiteren Dichtlippe 20, die sich aus den zusammenlaufenden Dichtlippen 16 ergibt.

Diese erfindungsgemäße Ausführungsform beruht darin, dass der Bereich der kritischen Verschraubungsöffnung bzw. Ausnehmung 10 freigestanzt ist und in diesem Bereich ein zusätzliches ringförmiges Element oder ein Ring 24 eingesetzt ist. Es können auch mehrere ringförmige Elemente jeweils an mehreren oder allen Verschraubungsöffnungen eingesetzt werden. Die ringförmigen Elemente 24 übernehmen die Funktion der Schraubenöffnungsumfahrung am Trägerblech 4, wodurch die Ausnehmung nach innen zur Verschraubungsöffnung 10 vollständig geschlossen ist. Der eigentliche Trägerrahmen 4 umfährt die Ausnehmung 10 auf der Seite zum Elastomer-Dichtprofil 6 nicht, da dieser Bereich jeweils durch das zusätzliche Element bzw. den zusätzlichen Ring 24 gebildet wird. Das bedeutet, dass bei dieser neuartigen Lösung der eigentliche Trägerrahmen 4 immer zur Innenseite hin eine Öffnung aufweist, in der dann der Ring liegt, der an dieser Stelle die Aufgabe des Trägerrahmens übernimmt, die Schraubenöffnung geschlossen zu umgeben. Die Lösung kann so aussehen, dass der Ring 24 nur minimal an der Trägerrahmenseite 4 anliegt bis zu einer Ausführungsform, bei der das Ringelement noch etwas von beiden Seiten her umschlossen ist.

Idealerweise wird das Ringelement von dem Trägerrahmen mehr als halb umschlossen, und kann dann besonders einfach in dem Trägerrahmen positioniert bzw. mit einer Presspassung Vormontiert werden (bzw. eingeklemmt werden). Die Ringe 24 könnten theoretisch aber auch separat ohne direkte Verbindung zum Trägerblech erst im Werkzeug beispielsweise auf Stifte eingesetzt werden, und beim Spritzprozess mit dem Trägerrahmen durch Elastomer verbunden werden.

Die ringförmigen Elemente 24 können separat gefertigt werden, weshalb andere Fertigungsverfahren als Stanzen genutzt werden können. Durch den Einsatz der Ringe bzw. ringförmigen Elemente können die typischen Herstellungsgrenzen des Stanzprozesses umgangen werden. Als Herstellungsverfahren bietet sich Fließpressen oder auch die spanende Bearbeitung an. Ebenso ist Ziehen als Herstellungsverfahren möglich. Es ist sogar möglich die Ringelemente aus Vierkantdraht zu biegen, wobei im Einsatz die Nahtstelle in Richtung des Trägerrahmens weisen sollte und nicht in Richtung des Elastomer-Dichtprofils. Die Ringelemente können mit hinreichender Fertigungsgenauigkeit kostenoptimiert hergestellt werden. Diese Elemente können mit sehr großer Genauigkeit gefertigt werden. Es ist sogar vorgesehen, die Ringelemente durch Metall-Spritzguss schnell und einfach herzustellen.

Im Vergleich zu den notwendigen Umfahrungsbreiten am Trägerblech für eine Standardträgerrahmendicke von 2mm ist bereits eine Umfahrung mit einem quadratischen Querschnitt an der Grenze dessen was mit einem Stanzverfahren kostengünstig hergestellt werden kann. Eine derartige Umfahrung benötigt dabei eine Mindestbreite von ebenfalls 2mm und würde bereits die vorstehend beschriebenen Nachteile aufweisen. Typische Innendurchmesser sind bei M6 Schrauben, die häufig bei solchen Flanschverschraubungen angewendet werden liegen bei ca. 6,8 bis 7mm. Im Vergleich zu den Technischen Herausforderungen einer durch Stanzen hergestellten Umfahrung ist die Herstellung eines Ringelements im Drehprozess mit einem Innendurchmesser von ca. 7mm und einer Höhe von 2mm bei Breite von 2mm oder sogar weniger keine große Herausforderung. Abweichend zur Herstellung im Stanzprozess gibt es hier keinerlei Einzüge, was im Nachhinein beim Anspritzen des Elastomers zu einer optimalen Abprägung im Elastomer Spritzwerkzeug führt und Überspritzungen zuverlässig vermeidet. Würde ein Ring mit 2mm Höhe und einer Ringbreite von 1mm eingesetzt, würde das zu einem Vorteil im Bauraum von 1 mm bedeuten was, bei den momentanen geringen Abmessungen einen erheblichen Platzgewinn darstellt, wohingegen bisherige Fortschnitte lediglich in einem Bereich von einzelnen zehntel oder hundertstel Millimeter möglich waren.

Ein weiterer Vorteil dieser Erfindung besteht darin, dass die ringförmigen Elemente aus einem anderen Material als der Rest des Trägerrahmens hergestellt werden können. Es ist somit möglich einen Aluminiumträgerrahmen 4 mit ringförmigen Elementen 24 aus Stahl oder Messing herzustellen, um bei gleicher Festigkeit die Abmessungen der Trägerrahmendichtung noch weiter verringern zu können.

Die ringförmigen Elemente können entweder vormontiert werden und als Einheit mit dem Trägerrahmen verbunden werden oder auch separat erst in das Spritzwerkzeug eingelegt werden. Zur Vormontage bieten sich je nach Materialkombination Einpressen, Einkleben, Schweißen an.

Im Bereich umspritzter Trägerrahmendichtungen, d.h. bei Dichtungen in denen ein dünnes Trägerblech in einem, Elastomerprofil integriert ist, gibt es bereits unterschiedliche Ausführungsformen mit eingearbeiteten Ringen. Bei diesen Systemen dienen die Ringe als Abstandshalter zur Dichtspaltbegrenzung. Bei diesen Systemen wird ein dünnes Trägerblech, meist Stahl verwendet bei dem die Funktion von Abstandshaltern durch eingepresste oder eingelegte Ringe erfolgt. Der Trägerrahmen wird hierbei vollständig umspritzt und die Ringe liegen meist Mittig im Trägerrahmen angeordnet. Im Gegensatz dazu wird in der vorliegenden Erfindung der Ring bzw. das Ringelement verwendet, das die gleiche axiale Abmessung bzw. Dicke wie der Trägerrahmen aufweist. Umspritzte Trägerrahmendichtungen lassen sich jedoch nicht ohne weiteres mit Trägerrahmendichtungen vergleichen bei denen das Dichtprofil nur an einer Stirnseite angespritzt ist.

Im Gegensatz zu den Figuren 3A, 3B und 3D ist es ebenfalls vorgesehen, ein Dichtprofil zu verwenden, dessen Breite und dessen Querschnitt überall im wesentlichen gleich ist. Somit soll auch eine Trägerrahmendichtung mit nur einer Dichtlippe oder mit zwei Dichtlippen, die nebeneinander auch um die Ausnehmungen verlaufen als beschrieben angesehen werden, da diese Ausführungsform in den Figuren nur weggelassen wurde, um die Beschreibung nicht unnötig umfangreich zu gestalten.

Die vorliegende Erfindung gestattet es in einer Ausführungsform, einen minimalen Bauraum und einen kleineren Bauraum als mit allen bekannten Lösungen darstellbar ist zu erreichen.
Es ist mit der vorliegenden Erfindung nun möglich, die Abmessungen einer Trägerrahmendichtung erheblich zu verringern.
Die vorliegende Erfindung gestattet den Einsatz unterschiedlicher Materialkombinationen, um die Trägerrahmendichtung weither in Bezug auf Herstellungskosten, Gewicht, Abmessungen sowie Bauraum zu optimieren.
Es sind Varianten mit unterschiedlichen Höhen der Ringelemente denkbar, herkömmlich werden jedoch nur Ringelemente verwendet, deren Abmessungen der Höhe des Trägerblechs entsprechen. Bei extrem kleinen Ringbreiten für minimale Abmessungen können die Ringe etwas Überstand haben, um beim Schließen des Werkzeugs auf die optimale Höhe verformt zu werden, und das Werkzeug an der Stelle sicher abzusichten, damit Elastomerüberläufe vermieden werden können.
Durch den Einsatz unterschiedlicher Materialien können die Eigenschaften der Trägerrahmendichtung weiter beeinflusst werden.
Bei Standardträgerblechen aus Aluminium kann z.B. durch den Einsatz von Stahlringen die Festigkeit im Bereich der Schraubenaugen erhöht werden und es können größere Schraubenkräfte übertragen werden.

Es ist ebenfalls vorgesehen die Breite des Rings zu optimieren, indem der Ring beispielsweise eine ovale Außenform und eine runde Innenform aufweist. Damit können die Kräfte die durch die Schrauben auf den Ring und speziell auf den Dichtungsflansch wirkten besser verteilt werden, um zu verhindern, dass sich der Ring in die Flanschfläche eines Aluminiumbauteils eingraben kann.

## Patentansprüche

1. Trägerrahmendichtung (2) mit verringertem Platzbedarf, umfassend
- einen Trägerrahmen (4) und
- ein Dichtprofil (6) aus einem Elastomermaterial, das stumpf an eine Stirnseite des Trägerrahmens (4) anvulkanisiert ist,
wobei der Trägerrahmen (4) weiter mit Aussparungen für Befestigungselemente versehen ist,
**dadurch gekennzeichnet, dass** der Trägerrahmen (4) im Bereich mindestens einer Aussparung (10) an der Seite, an dem das Dichtprofil (6) anvulkanisiert ist, unterbrochen ist, und nur auf der Seite der Aussparung (10) verläuft, die dem Dichtprofil (6) gegenüberliegt, wobei der Trägerrahmen (4) an der mindestens einen Aussparung (10) mit einem Ring (24) versehen ist, der in der mindestens einen Aussparung (10) angeordnet ist.

2. Trägerrahmendichtung nach Anspruch 1, **dadurch gekennzeichnet, dass** der Ring (24) eine Wanddicke aufweist, die kleiner ist als eine Breite eines Steges, der in den Trägerrahmen gestanzt werden kann, ohne dass sich das Material des Trägerrahmens verzieht.

3. Trägerrahmendichtung nach Anspruch 1, **dadurch gekennzeichnet, dass** ein Material, aus dem der Ring (24) gefertigt ist, eine höhere Festigkeit als ein Material aufweist, aus dem der Trägerrahmen (4) gefertigt ist.

4. Trägerrahmendichtung nach einem der vorstehenden Ansprüche,
wobei mindestens eine weitere der Aussparungen (10) von dem Dichtprofil (6) umfahren wird, wobei das Dichtprofil (6) im Bereich mindestens einer Umfahrung in der Breite verringert ist.

5. Trägerrahmendichtung nach einem der Anspruch 4, **dadurch gekennzeichnet, dass** das Dichtprofil (610) in dem Bereich der mindestens einen Umfahrung eine Dichtlippe (20) aufweist, und in Bereichen außerhalb der mindestens einen Umfahrung zwei Dichtlippen (16) aufweist, die nebeneinander verlaufen.

6. Trägerrahmendichtung nach Anspruch 5, **dadurch gekennzeichnet, dass** die eine Dichtlippe (20) breiter ausgeführt ist als jede der beiden nebeneinander verlaufenden Dichtlippen (16).

7. Trägerrahmendichtung nach einem der vorstehenden Ansprüche, sofern abhängig von Anspruch 1, **dadurch gekennzeichnet, dass** der mindestens eine Ring außen nicht rund ist.

8. Trägerrahmendichtung nach einem der vorstehenden Ansprüche, sofern abhängig von Anspruch 1, **dadurch gekennzeichnet**, der Ring nicht geschossen ist.

9. Trägerrahmendichtung nach einem der vorstehenden Ansprüche, **dadurch gekennzeichnet, dass** der Trägerrahmen aus einem Blech ausgestanzt ist.

10. Trägerrahmendichtung nach einem vorhergehenden Anspruch, **dadurch gekennzeichnet, dass** der Ring (24) eine andere Höhe hat als der Trägerrahmen (4).

11. Trägerrahmendichtung nach einem vorhergehenden Anspruch, **dadurch gekennzeichnet, dass** der Ring (24) mit dem Trägerrahmen (4) im Spritzwerkzeug verbunden werden kann.

12. Trägerrahmendichtung nach einem vorhergehenden Anspruch, **dadurch gekennzeichnet, dass** der Ring (24) mit dem Trägerrahmen (4) schon vor dem Spritzverfahren verbunden werden kann.

## Claims

1. A support frame seal (2) with reduced space requirements, comprising
- a support frame (4) and
- a sealing profile (6) from an elastomer material, which is vulcanised bluntly to a face of the support frame (4),
wherein the support frame (4) is further provided with recesses for fastening elements,
**characterised in that** the support frame (4) is interrupted in the area of at least one recess (10) on the side, onto which the sealing profile (6) is vulcanised, and is present only on that side of the recess (10), which is opposite the sealing profile (6), wherein the support frame (4), at the at least one recess (10), is provided with a ring (24), which is arranged in the at least one recess (10).

2. The support frame seal according to claim 1, **characterised in that** the ring (24) comprises a wall thickness, which is smaller than a width of a web which can be punched into the support frame without the material of the support frame becoming warped.

3. The support frame seal according to claim 1, **characterised in that** a material from which the ring (24) is made, comprises a higher strength than a material from which the support frame (4) is made.

4. The support frame seal according to one of the preceding claims, wherein at least one other of the recesses (10) is bypassed by the sealing profile (6), wherein the sealing profile (6) is reduced in width in the area of at least one bypass,.

5. The support frame seal according to claim 4, **characterised in that** the sealing profile (610) comprises a sealing lip (20) in the area of the at least one bypass, and comprises two sealing lips (16) in areas outside the at least one bypass, which are adjacent to each other.

6. The support frame seal according to claim 5, **characterised in that** the one sealing lip (20) is made wider than each of the two sealing lips (16) which are adjacent to each other.

7. The support frame seal according to one of the preceding claims insofar as dependent on claim 1, **characterised in that** the at least one ring is not round on the outside.

8. The support frame seal according to one of the preceding claims insofar as dependent on claim 1, **characterised in that** the ring is not closed.

9. The support frame seal according to one of the preceding claims, **characterised in that** the support frame is punched from sheet metal.

10. The support frame seal according to one preceding claim, **characterised in that** the ring (24) is different in height from the support frame (4).

11. The support frame seal according to one preceding claim, **characterised in that** the ring (24) may be connected to the support frame (4) in the injection moulding tool.

12. The support frame seal according to one preceding claim, **characterised in that** the ring (24) may be connected to the support frame (4) prior to the injection moulding process.

## Revendications

1. Joint à cadre support (2) à encombrement réduit, comprenant :
- un cadre support (4) et
- un profilé d'étanchéité (6) constitué d'un matériau élastomère, qui est vulcanisé en aboutement sur un côté frontal du cadre support (4) ,
dans lequel le cadre support (4) est pourvu en outre de cavités pour des éléments de fixation,
**caractérisé en ce que** le cadre support (4) est interrompu au niveau d'au moins une cavité (10) sur le côté, sur lequel le profilé d'étanchéité est vulcanisé, et s'étend seulement sur le côté de la cavité (10), qui est en vis-à-vis du profilé d'étanchéité (6), dans lequel le cadre support (4) est pourvu sur au moins une cavité (10) d'une bague (24), qui est disposée dans au moins une cavité (10).

2. Joint à cadre support selon la revendication 1, **caractérisé en ce que** la bague (24) présente une épaisseur de paroi, qui est inférieure à une largeur d'un gradin, qui peut être découpé à l'emporte-pièce dans le cadre support, sans entamer le matériau du cadre support.

3. Joint à cadre support selon la revendication 1, **caractérisé en ce que** un matériau, à partir duquel la bague (24) est fabriquée, présente une rigidité supérieure à un matériau, à partir duquel le cadre support (4) est fabriqué.

4. Joint à cadre support selon une des revendications précédentes, dans lequel au moins une autre des cavités (10) est contournée par le profilé d'étanchéité (6), dans lequel le profilé d'étanchéité (6) a une largeur réduite au niveau d'au moins un contournement.

5. Joint à cadre support selon la revendication 4, **caractérisé en ce que** le profilé d'étanchéité (610) présente au niveau d'au moins un contournement une lèvre d'étanchéité (20), et dans les zones à l'extérieur d'au moins un contournement deux lèvres d'étanchéité (16) qui s'étendent à côté l'une de l'autre.

6. Joint à cadre support selon la revendication 5, **caractérise en ce que** une des lèvres d'étanchéité (20) est conçue plus large que chacune des deux lèvres d'étanchéité (16) s'étendant à côté l'une de l'autre.

7. Joint à cadre support selon une des revendications précédentes, en dépendance de la revendication 1, **caractérisé en ce que** au moins une bague n'est pas ronde à l'extérieur.

8. Joint à cadre support selon une des revendications précédentes, en dépendance de la revendication 1, **caractérisé en ce que** la bague n'est pas fermée.

9. Joint à cadre support selon une des revendications précédentes, **caractérisée en ce que** le cadre support est découpé à l'emporte-pièce dans une tôle.

10. Joint à cadre support selon une des revendications précédentes, **caractérisé en ce que** la bague (24) a une hauteur plus grande que le cadre support (4).

11. Joint à cadre support selon une des revendications précédentes, **caractérisé en ce que** la bague (24) peut être reliée avec le cadre support (4) dans l'outil d'injection.

12. Joint à cadre support selon une des revendications précédentes, **caractérise en ce que** la bague (24) peut être reliée avec le cadre support (4) bien avant le procédé d'injection.
